# EUROPEAN PATENT APPLICATION

(11) **EP 3 089 090 A1**
(43) Date of publication of application: **02.11.2016**
(21) Application number: 15165803.6
(22) Date of filing: 29.04.2015
(51) Int. Cl.: G06Q 20/00, G06Q 20/32, G06Q 20/40

(54) **PAYMENT HEADWEAR**

(71) Applicant: Mastercard International Incorporated, Purchase NY 10577 (US)
(72) Inventor: Phillips, Simon, York, Yorkshire YO30 6LN (GB); Johnson, Alan, Rayleigh, Essex SS6 9RT (GB)
(74) Representative: Gill Jennings & Every LLP

(57) **Abstract**

Headwear comprising an image capture device configured to capture a visual purchase identifier observable by a wearer of said headwear; and a processor connected to said image capture device and configured to, in response to receiving data from the image capture device, identify said visual purchase identifier and initiate payment for a purchase identified by the visual purchase identifier.

## Description

The present disclosure relates to using headwear to identify and initiate a purchase. In particular, smart spectacles may be used to facilitate quicker online and in-aisle shopping.

### Background

Consumers are becoming increasingly used to non-traditional payment experiences. As e-commerce has become more prevalent, store-based purchases have become quicker and easier, for example through the introduction of contactless payment schemes. User devices such as personal computers (PCs), laptops, tablets and smartphones are also increasingly being used to effect payment in place of or in conjunction with traditional point of sale (POS) devices such as chip and PIN machines and magnetic stripe readers.

For example, United States patent application publication number 2014/0101036 describes a system in which, on selecting a checkout option on an online shopping cart page, a quick response (QR) code is generated and displayed on the graphical user interface (GUI) of the device on which the online shopping is being carried out, for example a PC or laptop. Another user device, for example a smartphone or tablet running a payment application (app), is then used to scan the QR code. The payment app can then authenticate the user by requiring input of a personal identification number (PIN) before connecting to a payment gateway to effect payment for the purchase identified by the QR code. The first user device thus performs the function of a shop while the second user device performs the function of a chip and PIN machine in that shop.

### Summary

According to a first aspect there is provided headwear comprising: an image capture device configured to capture a visual purchase identifier observable by a wearer of said headwear; and a processor connected to said image capture device and configured to, in response to receiving data from the image capture device, identify said visual purchase identifier and initiate payment for a purchase identified by the visual purchase identifier.

The headwear could further comprise a biometric sensor configured to perform at least part of a biometric authentication of the wearer in order to secure said payment. Said biometric sensor could be a fingerprint scanner, an iris scanner, a heartbeat sensor, a body temperature sensor, a brain activity monitor or any combination of the same.

The headwear could further comprise a secure element (SE) for facilitating said payment.

The headwear could further comprise a wireless transmitter for communicating with a user device via which said payment is made. The headwear could further comprise a wireless transmitter for communicating with a point of sale terminal device through which said payment is made. The headwear could further comprise a wireless transmitter for communicating with a payment gateway through which said payment is made.

Said image capture device could be a QR code scanner.

The headwear could further comprise an optical head-mounted display (OHMD).

Said OHMD could be configured to, in response to said initiation of payment, present said wearer with one or more payment fund sources to select. Said payment fund sources could comprise one or more of debit cards, credit cards, loyalty/reward points and coupons. The OHMD could be configured to present the wearer with a receipt for said purchase.

The headwear could further comprise a viewfinder system for selecting the visual purchase identifier. Said viewfinder system could compris one or both of a laser-guide and an OHMD.

According to a second aspect there is provided a system comprising: the headwear of the first aspect; and a payment gateway through which said payment is made.

The system could further comprise a user device comprising a GUI configured to display the visual purchase identifier as part of an online shopping page. Said display could be in response to addition of one or more products to an online shopping basket.

Said user device could be further configured to communicate with the headwear and said payment gateway to effect the payment.

The system could further comprise the visual purchase identifier, wherein the visual purchase identifier is a product, a marker on a product, or a sign identifying a product location such as a shelf or rack tag.

The system could further comprise a user device configured to communicate with the headwear and said payment gateway to effect the payment.

The user device could comprise a biometric sensor configured to perform at least part of a biometric authentication of the wearer in order to secure the payment. The user device could comprise an SE for facilitating the payment. The user device could comprise a wireless transmitter for communicating with one or more of: the headwear, a point of sale terminal device through which the payment is made; and the payment gateway.

According to a third aspect there is provided a method comprising: headwear identifying a visual purchase identifier observable by a wearer of said headwear; and the headwear initiating payment for a purchase identified by said purchase identifier.

### Brief Description of the Drawings

Implementations will now be described in detail, by way of example only, with reference to the accompanying drawings, in which:
Figure 1 illustrates as example payment system;
Figure 2 shows example headwear;
Figure 3 illustrates an example card selection GUI;
Figure 4 shows an example web page with visual purchase identifier;
Figure 5 shows an example shelf tag with visual purchase identifier; and
Figure 6 is a flowchart of an example method for payment using headwear as described herein.

### Detailed Description

Smart headwear can be used to make shopping experiences quicker and easier by allowing a wearer to select items for purchase and/or initiate payment for those items simply by looking at them (or at a visual purchase identifier identifying them).

Such headwear could comprise one or more sensors such as a camera, an accelerometer or a gyroscope to determine the wearer's line of sight.

The headwear could be in the form of eyewear, for example smart spectacles such as Google Glass®.

The headwear could comprise an OHMD. This could be used as part of a viewfinder, the wearer providing an indication to the headwear via a user input device (e.g. a microphone if a voice recognition function is provided or a button somewhere on the spectacle frame) when a marker (such as cross-hairs or a selection box) is in line, from their point of view, with a purchase identifier to be selected.

In order for an electronic purchase to be made, payment is generally initiated through a payment gateway. Connection to a payment gateway is generally made through an SE with a mobile payment application stored thereon. The mobile payment application and the secure element are personalized with payment account information, including one or more primary account numbers (PAN), a PIN, authentication cryptogram (AC) keys, and card verification (CVC3) keys (as well as other payment account information such as, for example, an account expiry date, etc.). Such an SE may be incorporated into the headwear or into an intermediary device, such as a smartphone or tablet with which the headwear can communicate, whether by means of a wired connection or wirelessly. The inclusion of an SE in the headwear avoids the need for the wearer to also carry an intermediary device. The inclusion of an SE in an intermediary device on the other hand enables offloading of processing from the headwear, allowing the headwear to be smaller, lighter and less expensive and improving its battery life.

The headwear could comprise a wireless transmitter for communicating with the payment gateway and/or an intermediary device. Such a transmitter could enable direct or indirect connection to a network such as the Internet. Communication could be by means of any suitable protocol technology, for example cellular, Bluetooth®, infra-red (IR) etc.

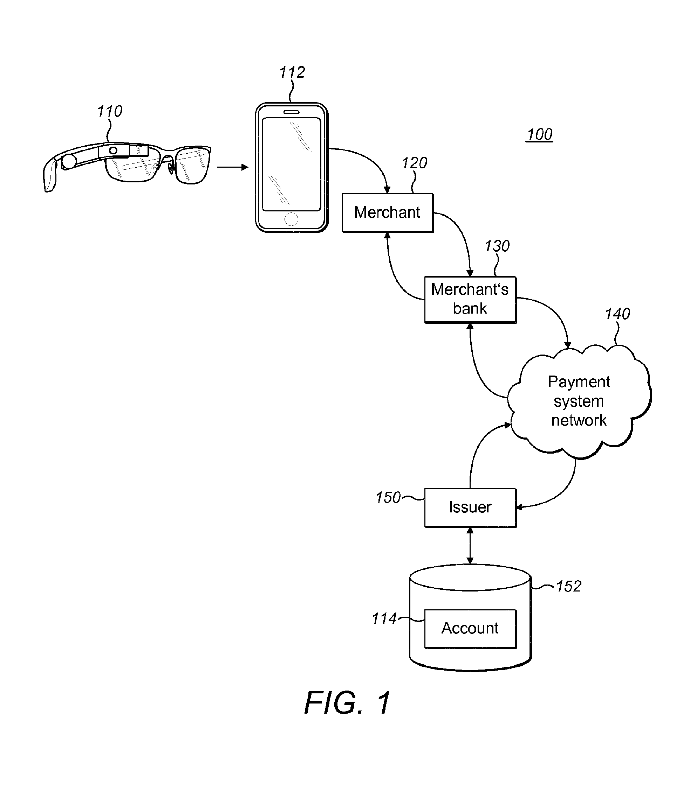

For example, see Figure 1 which shows a schematic of an example multi-party payment transaction system 100 for enabling payment-by-card or similar transactions by a customer using headwear 110 at a merchant 120. An issuer 150, usually a financial institution such as a bank, establishes for the customer a customer's account 114 and stores and updates data in association with that account, for example, in a database 152. The issuer 150 also provides the customer with a payment application for an intermediary device 112, such as a smartphone or tablet, which is configured to be associated with the customer's account 114.

A payment transaction is initiated when the customer uses the headwear 110 to view a visual purchase identifier. Intermediary device 112 can then tender a payment for a purchase from the merchant 120 via e-commerce. A series of exchanges between the parties depicted in Figure 1 then proceeds to complete the transaction. These exchanges may generally be viewed as being conducted in four stages: (1) a customer-merchant interaction, (2) authorisation, (3) clearing, and (4) settlement.

At the customer-merchant interaction stage, the merchant 120 captures (reads, receives, or the like) device credentials from the intermediary device 112.

During the authorisation stage, the identity of the customer's account, the authenticity of the intermediary device 112, and the availability of funds in the customer's account 114 are confirmed. The merchant 120 transmits electronically the information captured from the intermediary device to the transaction processing computers of a merchant's bank 130 (or an acquirer / an acquiring bank) to request authorisation of the transaction. The request may also include the transaction amount, such as the purchase amount.

A payment system network 140, such as the MasterCard™ payment-processing network, facilitates communications between the computers of the merchant's bank 130 and the computers of the issuer 150, which in turn determine whether to authorise or decline the payment. If the issuer 150 authorises the payment, it decreases availability of funds on the consumer's account 114 accordingly and issues an authorisation code to the merchant 120. The authorisation code is transmitted back to the merchant 120 via the payment system network 140 and the merchant's bank 130.

During the clearing stage, the payment system network 140 facilitates transmission of the transaction data between the parties to ensure that all parties have the necessary and correct information for settling the transaction, and that the transaction is settled according to the payment guidelines and rules established by the payment system network 140.

Finally, during the settlement stage, the payment system network 140 facilitates the exchange of funds so that the appropriate parties are paid in relation to the transaction.

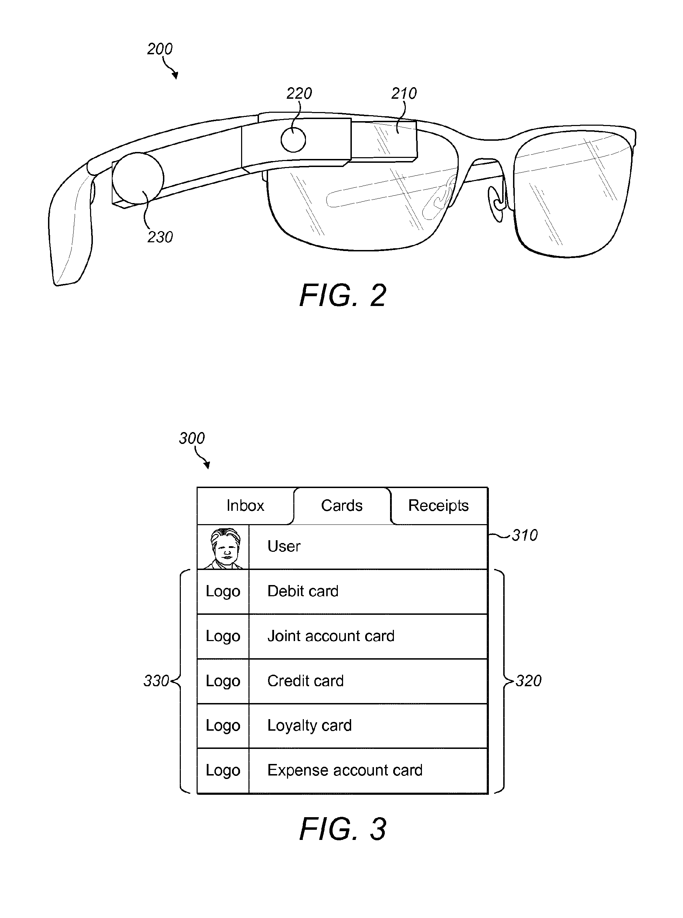

Payments could be authenticated biometrically. A biometric sensor could be comprised in the headwear and/or an intermediary device. For example, Figure 2 shows example smart spectacles 200 comprising OHMD 210, laser guiding system 220 and fingerprint sensor 230, located on the right hand spectacle arm for ease of use by a right handed wearer. Possible biometric sensors that could be used include fingerprint scanners (e.g. on an arm or bridge of smart spectacles or on a smartphone), iris scanners (e.g. mounted in the frame of smart spectacles), heartbeat sensors (e.g. in a smart watch acting as an intermediary device or on an arm of smart spectacles in line with a wearer's temple), body temperature sensors, brain activity monitors (e.g. incorporating electroencephalography (EEG), magnetoencephalography (MEG), event-related optical signal (EROS) or other functional neuroimaging technologies).

Such biometric sensors could be used in a number of ways. If the sensor is comprised in the headwear or an intermediary device also worn on the user's body (e.g. a watch or anklet), a single authentication could be performed each time the sensor-bearing device is donned by the user. For example, an iris scanner, heartbeat monitor or brain activity monitor need not repeat authentication once it has been determined that detected indicia match those stored for a particular user, until there is an indication that the sensor-bearing device has been doffed by the user. (Such an indication could be from a change or break in a signal from the biometric sensor and/or one or more other sensors e.g. an accelerometer or thermometer.)

Alternatively, a user interface of the headwear or intermediary device (e.g. a GUI of an OHMD or smartphone screen or a speaker) could indicate to the user when biometric authentication is required so that they can, for example, touch their finger to a fingerprint sensor at the point in a transaction which might otherwise require entry of a PIN.

A biometric sensor which requires action by the user for data collection, such as a fingerprint sensor, could be used for simultaneous authentication and command input. For example, when the wearer of headwear comprising a fingerprint sensor has a visual purchase identifier of a product they would like to add to a shopping basket (whether real or virtual) in their eye line, for example as indicated by a viewfinder as discussed above, they could tap the fingerprint sensor to select that product for purchase. Biometric authentication of the addition to the basket can then be performed at the same time.

If no action is required from the user for biometric authentication, for example if the biometric sensor is an iris scanner, data collection from the sensor can be scheduled to occur automatically at one or more times during a purchase process, e.g. on donning the headwear or an intermediary device, on "checking out" to complete a purchase transaction or on selecting items to add to a real or virtual shopping basket as discussed above.

If the headwear comprises an OHMD, then following initiation of a payment (e.g. by means of the user providing a checkout command to the headwear or an intermediary device), the OHMD could display a selection of payment fund sources. For example, the user may have one or more loyalty or reward points or coupons valid for the proposed transaction, and the OHMD could present the option to pay or part-pay with those points or coupons. Alternatively or additionally, the user could have linked one or more debit or credit cards to their headwear, so that the OHMD provides them with the opportunity to select the desired card for the transaction. In either case, the user can select from a menu presented on the OHMD using any suitable user input means on the headwear or a linked intermediary device. For example, they may fix their gaze on the desired option on the OHMD, provide a voice command or press a button. Optionally, the balance available in a particular fund source, or across all of the user's linked fund sources, may be displayed before and/or after selection of one or more fund sources for the transaction.

Figure 3 shows an example card selection GUI 300 for a payment application linked to headwear, e.g. for display on an OHMD. The authorised user is identified at 310. Various cards the user is authorised to pay with are listed at 320 (e.g. a personal debit card, a joint account debit card, a credit card, a loyalty card and a business expense account card), with the corresponding logos at 330.

An OHMD or intermediary device could also be used to display a receipt to the user following a transaction.

The headwear could be used for both online and in-store purchases.

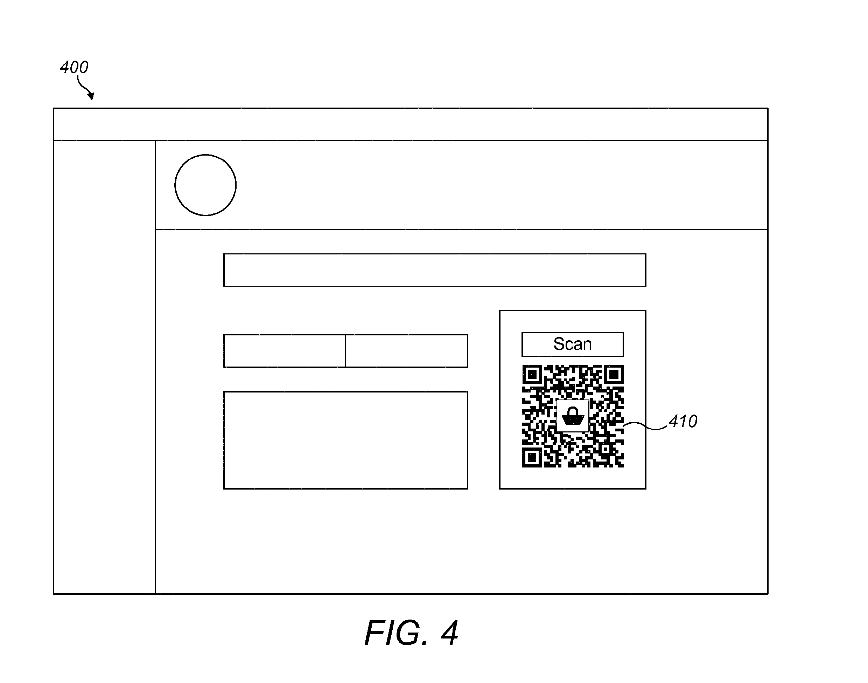

During online shopping, a visual purchase identifier may be provided by, for example, a "buy now" button, an image of a product, a product logo or a QR code on a GUI of a product webpage. Such visual purchase identifiers can be used to add an item to a virtual shopping basket. Alternatively or additionally, as shown in the example of Figure 4, once a user is ready to check out, having already selected one or more items for purchase on one or more webpages, a visual purchase identifier, for example in the form of a QR code 410, can be displayed on the GUI 400 of a check out page. Such a code could uniquely identify the combination of items selected for purchase.

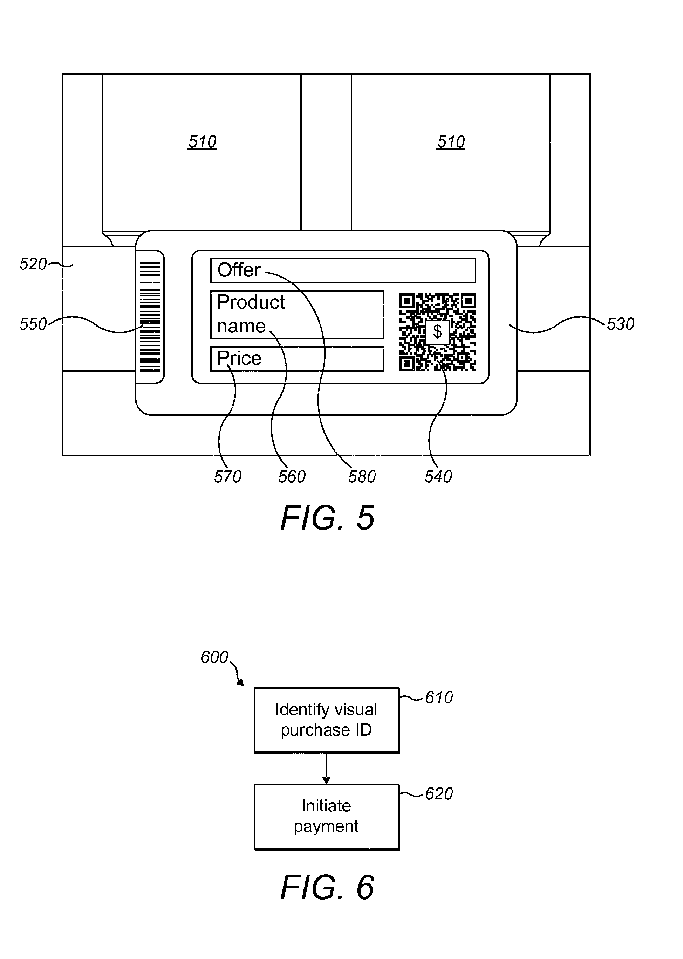

During in-store shopping, a visual purchase identifier may be provided by, for example, a QR code, logo or some text on a shelf tag or label, a sticker on product packaging, the packaging itself, or simply by the visual characteristics of the product as seen in the store environment (shape, size, colour etc.). For example, Figure 5 shows some drinks cans 510 on a shelf 520 over a reprogrammable electronic shelf tag 530. The shelf tag comprises a visual purchase identifier in the form of QR code 540, a barcode 550 for stock control purposes, the product name at 560, the unit price at 570 and any current offers (e.g. "2 for 1" or "15% off") at 580.

Figure 6 is a flowchart of a method 600 comprising headwear identifying a visual purchase identifier observable by a wearer of said headwear at 610; and the headwear initiating payment for a purchase identified by said purchase identifier at 620.

Other embodiments will be apparent to those skilled in the art from consideration of the specification and practice of the embodiments disclosed herein. It is intended that the specification and examples be considered as exemplary only, with a true scope of the invention being indicated by the following claims. In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim.

## Claims

1. Headwear comprising:
an image capture device configured to capture a visual purchase identifier observable by a wearer of said headwear; and
a processor connected to said image capture device and configured to, in response to receiving data from the image capture device, identify said visual purchase identifier and initiate payment for a purchase identified by the visual purchase identifier.

2. The headwear of claim 1, further comprising a biometric sensor configured to perform at least part of a biometric authentication of the wearer in order to secure said payment, said biometric sensor optionally being a fingerprint scanner, an iris scanner, a heartbeat sensor, a body temperature sensor, a brain activity monitor or any combination of the same.

3. The headwear of either of claims 1 or 2, further comprising a secure element, 'SE', for facilitating said payment.

4. The headwear of any of claims 1 to 3, further comprising a wireless transmitter for communicating with one or more of:
a user device via which said payment is made;
a point of sale terminal device through which said payment is made; and
a payment gateway through which said payment is made.

5. The headwear of any preceding claim, wherein said image capture device is a quick response, 'QR', code scanner.

6. The headwear of any preceding claim, further comprising an optical head-mounted display, 'OHMD'.

7. The headwear of claim 6, wherein said OHMD is configured to, in response to said initiation of payment:
present said wearer with one or more payment fund sources to select, said payment fund sources optionally comprising one or more of debit cards, credit cards, loyalty/reward points and coupons; and/or
present the wearer with a receipt for said purchase.

8. The headwear of any preceding claim, further comprising a viewfinder system for selecting the visual purchase identifier, said viewfinder system optionally comprising one or both of a laser-guide and an optical head-mounted display, 'OHMD'.

9. A system comprising:
the headwear of any preceding claim; and
a payment gateway through which said payment is made.

10. The system of claim 9, further comprising a user device comprising a graphical user interface, 'GUI', configured to display the visual purchase identifier as part of an online shopping page, said display optionally being in response to addition of one or more products to an online shopping basket.

11. The system of claim 10, wherein said user device is further configured to communicate with the headwear and said payment gateway to effect the payment.

12. The system of claim 9, further comprising the visual purchase identifier, wherein the visual purchase identifier is a product, a marker on a product, or a sign identifying a product location such as a shelf or rack tag.

13. The system of claim 12, further comprising a user device configured to communicate with the headwear and said payment gateway to effect the payment.

14. The system of any of claims 10, 11 or 13, wherein the user device comprises one or more of:
a biometric sensor configured to perform at least part of a biometric authentication of the wearer in order to secure the payment;
a secure element, 'SE', for facilitating the payment; and
a wireless transmitter for communicating with one or more of:
the headwear,
a point of sale terminal device through which the payment is made; and
the payment gateway.

15. A method comprising:
headwear identifying a visual purchase identifier observable by a wearer of said headwear; and
the headwear initiating payment for a purchase identified by said purchase identifier.
